Europäisches Patentamt

European Patent Office

Office européen des brevets

(19)

(11) EP 0 944 202 A2

(12) EUROPÄISCHE PATENTANMELDUNG

(43) Veröffentlichungstag:
22.09.1999 Patentblatt 1999/38

(51) Int Cl.⁶: H04L 9/30

(21) Anmeldenummer: 99200673.4

(22) Anmeldetag: 08.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 14.03.1998 DE 19811175

(71) Anmelder:
• Philips Patentverwaltung GmbH
22335 Hamburg (DE)
Benannte Vertragsstaaten:
DE
• Koninklijke Philips Electronics N.V.
5621 BA Eindhoven (NL)
Benannte Vertragsstaaten:
FR GB IT

(72) Erfinder:
• Philipp, Stefan, Dipl.-Ing.
Röntgenstrasse 24, 22335 Hamburg (DE)
• Böh, Frank, Dipl.-Ing.
Röntgenstrasse 24, 22335 Hamburg (DE)

(74) Vertreter: Schmalz, Günther, Dipl.-Ing. et al
Philips Patentverwaltung GmbH,
Röntgenstrasse 24
22335 Hamburg (DE)

(54) **Verfahren und Anordnung zur Abwehr kryptoanalytischer Untersuchungen**

(57) Kryptoanalytische Anordnungen werden benutzt, um Nachrichten oder Daten nur einem berechtigten Personenkreis zugänglich zu machen. Dabei werden Verfahren genutzt, die mit geheimen und öffentlichen Schlüsseln arbeiten. Da der benutzte Schlüssel immer das selbe Bitmuster aufweist, kann mit einem äquivalenten Aufbau der Anordnung und entsprechend vielen Zeitmessungen der Schlüssel von Unberechtigten bitweise analysiert werden. Um diese Art der Analyse prinzipiell zu umgehen, wird der Schlüssel, der in diesem Verfahren Exponent ist, mit einem Bitmuster verknüpft. Dadurch variiert das Bitmuster mit dem die Nachricht verschlüsselt wird bei jeder Berechnung und der Aufbau der kryptoanalytischen Anordnung läßt sich somit nicht nachvollziehen. Damit ist die Ermittlung des geheimen Schlüssel für kryptoanalytische Untersuchungen wesentlich erschwert.

Fig.1

EP 0 944 202 A2

**Beschreibung**

Die Erfindung betrifft ein Verfahren und eine Anordnung zur Abwehr kryptoanalytischer Untersuchungen.

In vielen Bereichen des täglichen Lebens haben Datenträger Einzug gehalten, auf denen verschlüsselte Informationen gespeichert sind. Diese Informationen sollen möglichst effektiv vor dem Zugriff unberechtigter Personen geschützt werden. Als Beispiel dafür soll hier die Smart Card angeführt werden, die z.B. den Zugangscode für Pay-TV enthalten kann.

Ein häufig benutztes und bekanntes Verfahren, um Nachrichten nur berechtigten Personen zugänglich zu machen, sind Standard Public Key Verfahren, wie z.B. RSA oder Diffie-Hellmann. Bei dem RSA-Verfahren wird ein öffentlicher und ein geheimer Schlüssel benutzt. Die zu verschlüsselnde Nachricht wird nach folgender Formel gebildet.

$$C = M^e \bmod N$$

hierbei ist M die zu verschlüsselnde Nachricht
e und N sind der öffentliche Schlüssel

Die verschlüsselte Nachricht C kann nun mit den öffentlichen Schlüsseln und einem geheimen Schlüssel nach folgender Formel entschlüsselt werden.

$$M = C^d \bmod N$$

mit d als geheimen Schlüssel

Die dargestellte Exponentation der Nachricht wird in der Regel unter Benutzung eines Square and Multiply Algorithmus in eine Sequenz modularer Multiplikationen zerlegt. Diese Art der Implementierung kann u.a. mit Hilfe von sogenannten Timing Attacken kryptoanalytisch untersuchbar sein, d.h. sie wäre nicht sicher. Da sich die geheimen Schlüssel nicht ändern, ist es möglich, mit Hilfe einer Simulation der Anordnung und den gebildeten Testvektoren, den geheimen Schlüssel zu analysieren. Dazu wird anhand von Zeitmessungen das Bitmuster des geheimen Schlüssels bitweise ermittelt. Hier wird die Tatsache ausgenutzt, daß modulare Multiplikationen für unterschiedliche Operanden unterschiedliche Ausführungszeiten haben können. Dieses Verfahren und auch die Gegenmaßnahmen werden in dem Artikel „Cryptoanalysis of Diffie-Hellmann, RSA, DSS and Other Systems Using Timing Attacks ", extended abstract, http://www.cryptography.com, Dez. 1995, von Paul Kocher beschrieben.

Eine weitere Möglichkeit den geheimen Schlüssel zu analysieren, besteht durch eine Art Fehlerinduktion. Dabei wird durch Maßnahmen von außen versucht, die kryptoanalytische Anordnung zu beeinflussen. Anhand der Fehler, die dann bei der Dekodierung auftreten, kann der Exponent, d.h. in diesem Fall der geheime Schlüssel analysiert werden.

Aufgabe ist es deshalb, ein Verfahren und eine Anordnung anzugeben, die die Ermittlung des geheimen Schlüssel durch kryptoanalytische Untersuchungen wesentlich erschwert.

Diese Aufgabe wird dadurch gelöst, daß ein mittels eines Zufallsgenerators erzeugtes Bitmuster r zum ersten Teilschlüssel e hinzugefügt wird, wobei das Bitmuster r derart mit der auf den zweiten Teilschlüssel N angewendeten Euler-Phi-Funktion kombiniert wird, daß das Endergebnis der Exponentation nicht beeinflußt wird.

Durch Hinzufügen eines zufälligen Bitmusters r zum Exponenten wird erreicht, daß bei jedem Decodiervorgang ein anderer Exponent verwendet wird und dieser nicht durch oben beschriebene kryptoanalytische Untersuchungen analysiert werden kann.

Public Key Verfahren basieren auf der oben genannten Formel. Wenn zu dem öffentlichen Schlüssel eine Zufallskomponente hinzugefügt wird, die am Ergebnis nichts verändert, jedoch das Bitmuster verändert, ist es bei einer kryptoanalytischen Untersuchung schwer, mehrere identische, reproduzierbare Operationen auf ein und derselben Hardware auszuführen.

Die Zufallskomponente wird dem Exponenten hinzugefügt, ohne daß sich das Ergebnis der modularen Exponentation ändert. Das Bitmuster des Exponenten variiert hingegen von Berechnung zu Berechnung und führt zu unterschiedlichen Sequenzen bei der modularen Multiplikation. Da die Zufallszahl außerhalb des kryptoanalytischen Gerätes nicht bekannt ist, kann die Berechnung nicht reproduziert werden.

Basierend auf dem Euler Theorem

$$x^{\phi(N)} \bmod N = 1$$

kann die modulare Exponentation zur Berechnung der Public Key Algorithmen auf dem kryptoanalytischen Gerät ersetzt werden durch

$$M^e \bmod N = M^e \bullet 1^r \bmod N$$

$$= M^e \bullet M^{r \bullet \phi(N)} \bmod N$$

$$C = M^{e + r \bullet \phi(N)} \bmod N$$

dabei ist r die Zufallszahl.

Nachfolgend wird ein Ausführungsbeispiel anhand der Figuren näher erläutert. Es zeigen:

Fig.:1    Aufbau einer kryptoanalytischen Anordnung
Fig.:2    funktionellen Einheiten des Prozessors

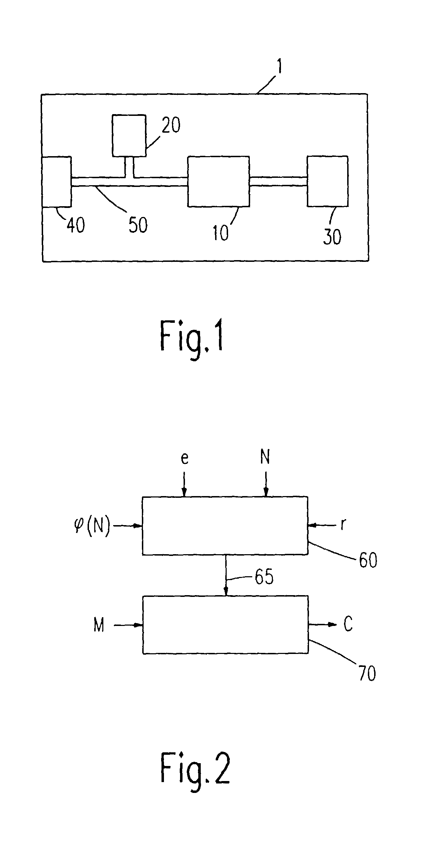

Figur 1 zeigt den Aufbau einer kryptoanalytischen Anordnung 1. Diese besteht im wesentlichen aus einem Prozessor 10, einem Speicher 20, einem Zufallsgenerator 30 und einer E/A-Einheit 40. Diese Einheiten sind zum Zwecke des Datenaustausches mit Verbindungsmitteln 50 verknüpft. Der Speicher 20 kann als Festwertspeicher oder als flüchtiger Speicher aufgebaut sein. In diesem Speicher sind der erste Teilschlüssel e und der zweite Teilschlüssel N abgelegt. Diese Schlüssel können je nach Anwendung bei der Initialisierung der Anordnung von außen über die E/A-Einheit zugeführt werden oder einmalig in beispielsweise einem EEPROM gespeichert sein. Über die Verbindungsmittel 50 werden diese dem Prozessor 10 zugeführt. Der Zufallsgenerator 30 erzeugt je nach Anwendung ein unterschiedlich langes Bitmuster, welches auch über die Verbindungsmittel 50 dem Prozessor 10 zugeführt wird. Über die E/A-Einheit 40 und die Verbindungsmittel 50 erhält der Prozessor 10 die von außen zugeführte unverschlüsselte Nachricht M. Über diese E/A-Einheit 40 wird die verschlüsselte Nachricht wieder ausgegeben.

Figur 2 zeigt den funktionellen Aufbau des Prozessors 10. Einer ersten Einheit 60 werden der erste Teilschlüssel e, der zweite Teilschlüssel N und das vom Zufallsgenerator generierte, bei jeder Berechnung variierende Bitmuster r zugeführt. Mit dem zweiten Teilschlüssel N kann entweder mit einer extra Recheneinheit, die hier nicht dargestellt ist, der EulerPhi-Funktionswert berechnet werden oder in einer Tabelle der entsprechende Funktionswert herausgesucht werden. Aus diesen Komponenten wird dann der Exponent 65 für die Formel $C = M^{e+r\cdot\phi(N)} \bmod N$ gebildet. In einer zweiten Einheit 70 wird aus der unverschlüsselten Nachricht M und dem in der ersten Einheit 60 gebildeten Exponenten 65 nach obiger Formel die verschlüsselte Nachricht C gebildet.

## Patentansprüche

1. Verfahren zur Verschlüsselung von Nachrichten in einer kryptoanalytischen Anordnung, basierend auf einem Public Key Verfahren mit einer Exponentation der zu verschlüsselnden Nachricht mit einem in einem Speicher abgelegten ersten Teilschlüssel e modulo einem ebenfalls im Speicher abgelegten zweiten Teilschlüssel N, dadurch gekennzeichnet, daß ein mittels eines Zufallsgenerators erzeugtes Bitmuster r zum ersten Teilschlüssel e hinzugefügt wird, wobei das Bitmuster r derart mit der auf den zweiten Teilschlüssel N angewendeten Euler-Phi-Funktion kombiniert wird, daß das Endergebnis der Exponentation nicht beeinflußt wird.

2. Verfahren nach Anspruch 1, dadurch gekennzeichnet, daß die im Prozessor durchgeführte Verschlüsselung nach $C = M^{e+r\cdot\phi(N)} \bmod N$ erfolgt, wobei C die verschlüsselte Nachricht und M die unverschlüsselte Nachricht darstellt.

3. Kryptoanalytische Anordnung zur Verschlüsselung von Nachrichten nach dem in Anspruch 1 oder 2 angegebenen Verfahren mit einem Prozessor zur Berechnung der Verschlüsselung und einem Speicher zum Speichern von Schlüsseln, einem Zufallszahlengenerator und einer Ein- und Ausgabeeinheit, dadurch gekennzeichnet, daß der Prozessor die Exponentation der unverschlüsselten Nachricht unter Verwendung des ihm zugeführten Teilschlüssels e, des Bitmusters r und des Euler-Phi-Funktionswertes des zweiten Teilschlüssels N durchführt und die verschlüsselten Nachrichten über die E/A-Einheit ausgibt, wobei der Exponent aus einer Verknüpfung des im Zufallsgenerator erzeugten Bitmusters r und eines im Prozessor generierten Euler-Phi-Funktionswertes des zweiten Teilschlüssels N mit dem ersten Teilschlüssel e besteht.

4. Kryptoanalytische Anordnung nach Anspruch 3 dadurch gekennzeichnet, daß die Euler-Phi-Funktionswerte des zweiten Teilschlüssels N in einem Speicher abgelegt sind.

5. Datenträger mit einer kryptoanalytischen Anordnung nach einem der Ansprüche 3 bis 4.

Fig.1

Fig.2